(19) Europäisches Patentamt
European Patent Office
Office européen des brevets

(11) **EP 2 600 672 B1**

(12) **EUROPEAN PATENT SPECIFICATION**

(45) Date of publication and mention
of the grant of the patent:
**05.12.2018 Bulletin 2018/49**

(51) Int Cl.:
*H04L 5/00* (2006.01)    *H04W 72/04* (2009.01)

(21) Application number: **11811750.6**

(86) International application number:
**PCT/CN2011/072421**

(22) Date of filing: **02.04.2011**

(87) International publication number:
**WO 2012/013048 (02.02.2012 Gazette 2012/05)**

(54) **PHYSICAL UPLINK CONTROL CHANNEL (PUCCH) RADIO RESOURCE ALLOCATION METHOD AND RADIO RESOURCE MANAGER**

FUNKRESSOURCENZUWEISUNGSVERFAHREN UND FUNKRESSOURCENMANAGER FÜR EINEN PHYSIKALISCHEN UPLINK-STEUERKANAL (PUCCH)

PROCÉDÉ D'ATTRIBUTION DE RESSOURCES RADIO DE CANAL DE COMMANDE DE LIAISON MONTANTE PHYSIQUE (PUCCH) ET GESTIONNAIRE DE RESSOURCES RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2010 CN 201010238306**

(43) Date of publication of application:
**05.06.2013 Bulletin 2013/23**

(73) Proprietor: **ZTE Corporation
Shenzhen, Guangdong 518057 (CN)**

(72) Inventors:
• **WANG, Wenfang
Guangdong 518057 (CN)**
• **SU, Xiaoming
Guangdong 518057 (CN)**
• **LI, Yujie
Guangdong 518057 (CN)**

(74) Representative: **Novagraaf Technologies
Bâtiment O2
2, rue Sarah Bernhardt
CS90017
92665 Asnières-sur-Seine Cedex (FR)**

(56) References cited:
**EP-A1- 1 075 769        EP-A2- 1 959 706
WO-A2-2009/120843     WO-A2-2010/018226
CN-A- 1 956 589           CN-A- 101 257 369
CN-A- 101 682 414**

EP 2 600 672 B1

**Description**

**Field of the Invention**

The disclosure relates to the communication field, and more particularly to a Physical Uplink Control Channel (PUCCH) radio resource allocation method and a radio resource manager.

**Background of the Invention**

In the Long Term Evolution (LTE), PUCCHs can be divided into two categories and totally six types: the first category includes three formats, i.e. format1, format1a and format1b, and the second category includes three formats, i.e. format2, format2a and format2b. The PUCCHs of the first category are configured to transmit the Scheduling Request (SR), the acknowledge (ACK) and the non-acknowledge (NACK) signaling, wherein the format1 is configured to transmit the SR, the format1a is configured to transmit the ACK/NACK of the single codeword stream, and the format1b is configured to transmit the ACK/NACK of the double codeword stream. The PUCCHs of the second category are mainly configured to transmit a Channel Quality Indicator (CQI), wherein the format2 is configured to only transmit the CQI, the format2a is configured to transmit the CQI and the ACK/NACK of the single codeword stream simultaneously, and the format2b is configured to transmit the CQI and the ACK/NACK of the double codeword stream simultaneously. The number of Resource Blocks (RB) occupied by the format1 a and the format1 b of the PUCCHs of the first category in the first time slot is related to the number of Downlink Control Channel Elements (CCE), which changes dynamically. The number of RBs occupied by the format1 of the PUCCHs of the first category and the PUCCHs of the second category is allocated to a User Equipment (UE) by a radio resource manager of a base station when the UE accesses a network.

At present, a solution for allocating and recovering radio resources in a PUCCH is provided in the related art. Taking the allocation of SR resources in the PUCCH as an example, the specific implementation process of the solution is as follows: a radio resource manager of a base station generates a resource pool; when a UE accesses a network, the radio resource manager searches the resource pool to allocates a resource being unused to the UE upon finding it, and sets the resource to be in the in-use state; and when the UE releases the resource, the radio resource manager sets the resource to be in the not-in-use state.

However, the above solution for allocating resources has the following defects. The demodulation performance of the PUCCH is related to the position of the resource used by the PUCCH. And, the above method for allocating resources does not adopt an optimal method for generating resources. Therefore, the demodulation performance of the PUCCH is not optimal. In addition, the allocated resources, the unallocated resources and the recovered resources are stored in a mixed manner in the above solution for allocating resources. Thus, every time a resource is allocated to a UE, it is required to perform the searching from the beginning and determine whether each resource is occupied. Therefore, the resource pool needs to be searched continually, the occupation state of each resource needs to be determined, and therefore the complexity of the system is increased.

Document EP1959706 relates to a wireless communication system, especially to a device and method for transmitting control channel with pre-allocated resources in the wireless communication system. Document EP1075769 relates to allocating resources in general, and more particularly, to allocating various data, signal, and/or communications processing resources. However, the above mentioned problem still remains unsolved.

**Summary of the Invention**

The main object of the disclosure is to provide a PUCCH radio resource allocation method and a radio resource manager, so as to at least solve the above problems of poor demodulation performance of the PUCCH and relatively high system complexity.

According to an aspect of the disclosure, a PUCCH radio resource allocation method is provided, comprising: A Physical Uplink Control Channel (PUCCH) radio resource allocation method, characterized by comprising: a radio resource manager grouping code-division resources, and combining time-division resources, frequency-division resources and the grouped code-division resources into a plurality of PUCCH resources according to an optimization order; the radio resource manager arranging the plurality of PUCCH resources according to a generation order of the plurality of PUCCH resources to form a resource pool, and employing an allocation pointer to point to a first PUCCH resource in the resource pool; and when a terminal needs to be allocated with a PUCCH resource, the radio resource manager allocating to the terminal the PUCCH resource to which the allocation pointer currently points, and moving the allocation pointer to point to a next PUCCH resource.

Preferably, the radio resource manager groups the code-division resources according to a mode of: the radio resource manager dividing the code-division resources into B groups; the number of the code-division resources in each

$$A = \left\lfloor \frac{U}{B} \right\rfloor$$

group being , and a difference between indexes of two adjacent code-division resources in the each group being B, wherein B is a constant, U represents a total number of the code-division resources, and $\lfloor \rfloor$ represents a round-down operation symbol.

Preferably, the radio resource manager combining the time-division resources, the frequency-division resources and the grouped code-division resources into the plurality of PUCCH resources according to the optimization order comprises: the radio resource manager selecting a part or all of the B groups; and the radio resource manager combining the time-division resources, the frequency-division resources and the code-division resources in the selected part or all of the B groups into the plurality of PUCCH resources according to the optimization order.

Preferably, the radio resource manager selects part of the B groups according to a mode of: the radio resource manager selecting the part of the B groups by means of interval selection.

Preferably, the radio resource manager combining the time-division resources, the frequency-division resources and the code-division resources in the selected part or all of the B groups into the plurality of PUCCH resources according to the optimization order comprises:

combining to obtain the plurality of PUCCH resources according to a formula of:

$$s = k' \times r \times t \times A + r \times t \times A + t \times A + a \text{ ,}$$

or

$$s = k' \times t \times r \times A + t \times r \times A + r \times A + a \text{ ,}$$

wherein s represents the index of the PUCCH resource, *k'* represents a index of a selected group, *r* represents the $r^{th}$ frequency division resource, t represents the $t^{th}$ time division resource, *A* represents the number of the code-division resources in a group whose index is *k'*, and *a* represents the $a^{th}$ code-division resource in a group whose index is k'.

Preferably, the radio resource manager arranging the plurality of PUCCH resources according to the generation order of the plurality of PUCCH resources to form the resource pool comprises: the radio resource manager placing the plurality of PUCCH resources obtained through the combination into corresponding PUCCH resource positions in the resource pool in turn according to a monotone increasing order of indexes of the plurality of PUCCH resources.

Preferably, the method further comprises: the radio resource manager employing a recovery pointer to point to a first PUCCH resource position in the resource pool; and when the terminal releases the PUCCH resource, the radio resource manager placing the released PUCCH resource to a PUCCH resource position to which the recovery pointer currently points, and moving the recovery pointer to point to a next PUCCH resource position.

Preferably, the method further comprises: when the number of unallocated PUCCH resources in the resource pool is less than a first threshold, the radio resource manager determining whether there is the PUCCH resource before the PUCCH resource position to which the recovery pointer currently points; and if yes, the radio resource manager performing resource combination; otherwise, the radio resource manager continuing to determine whether there is the PUCCH resource before the PUCCH resource position to which the recovery pointer currently points, and performing the resource combination if a preset condition is satisfied, wherein the preset condition comprises one of that: there is the PUCCH resource before the PUCCH resource position to which the recovery pointer currently points; the number of PUCCH resources before the PUCCH resource position to which the recovery pointer currently points reaches a second threshold; and there is the PUCCH resource before the PUCCH resource position to which the recovery pointer currently points and the unallocated PUCCH resources in the resource pool are not enough for allocation.

Preferably, the radio resource manager performing the resource combination comprises: the radio resource manager sorting the PUCCH resources before the PUCCH resource position to which the recovery pointer currently points according to the monotone increasing order of the indexes of the PUCCH resources; the radio resource manager combining the sorted PUCCH resources and placing the combined and sorted PUCCH resources before the PUCCH resource to which the allocation pointer currently points; and the radio resource manager moving the allocation pointer to point to the first PUCCH resource in the resource pool after the combination, and moving the recovery pointer to point to the first PUCCH resource position in the resource pool again.

According to another aspect of the disclosure, a radio resource manager is provided, comprising: a combining module, configured to group code-division resources, and combine time-division resources, frequency-division resources and the grouped code-division resources into a plurality of PUCCH resources according to an optimization order; a forming module, configured to arrange the plurality of PUCCH resources according to a generation order of the plurality of PUCCH resources to form a resource pool, and employ an allocation pointer to point to a first PUCCH resource in the resource pool; and an allocating module, configured to, when a terminal needs to be allocated with a PUCCH resource, allocate to the terminal the PUCCH resource to which the allocation pointer currently points, and move the allocation pointer to point to a next PUCCH resource.

Preferably, the forming module is further configured to move a recovery pointer to point to a first PUCCH resource position in the resource pool; and the radio resource manager further comprises: a recovering module, configured to, when the terminal releases the PUCCH resource, place the released PUCCH resource to a PUCCH resource position to which the recovery pointer currently points, and move the recovery pointer to point to a next PUCCH resource position.

According to the disclosure, when generating the PUCCH resource, the radio resource manager groups the code-division resources first, and then generates the frequency-division resources, the time-division resources, and the grouped code-division resources according to the performance optimization method and places them into the resource pool orderly. Allocating the resources in such a manner can improve the demodulation performance of the uplink control channel. Thus, this solution solves the problem in the related art that the PUCCH resources allocated by a radio resource manager to a UE cause poor performance of the control channel of a base station.

## Brief Description of the Drawings

The drawings described herein provide further understanding to the disclosure and constitute a part of the application. The exemplary embodiments of the disclosure and the explanation thereof are used for explaining the disclosure, and do not constitute an improper limitation to the disclosure. In the drawings:

Fig. 1 is a flowchart of a PUCCH radio resource allocation method according to an embodiment of the disclosure;
Fig. 2 is a flowchart of a PUCCH radio resource allocation method according to the first preferred embodiment of the disclosure;
Fig. 3 is a flowchart of a PUCCH radio resource allocation method according to the second preferred embodiment of the disclosure;
Fig. 4 is a schematic diagram of a radio resource manager according to an embodiment of the disclosure; and
Fig. 5 is a structural diagram of a radio resource manager according to a preferred embodiment of the disclosure.

## Detailed Description of the Embodiments

The disclosure will be described in detail below with reference to the drawings and in combination with the embodiments. It should be noted that, if there is no conflict, the embodiments in the application and the features in the embodiments can be combined with one another.

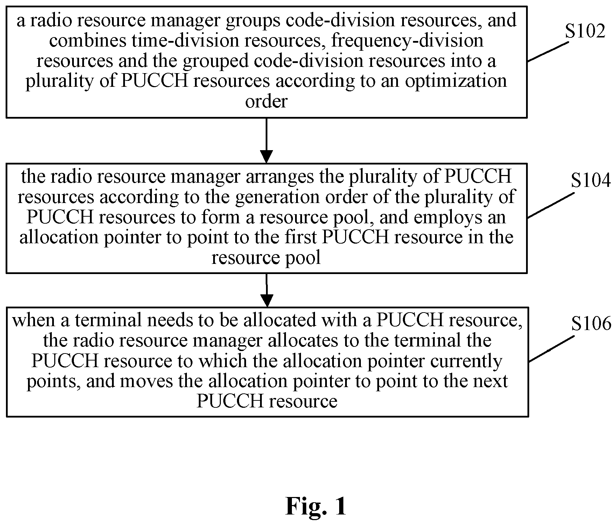

Fig. 1 is a flowchart of a PUCCH radio resource allocation method according to an embodiment of the disclosure, including the following steps.

Step S102: a radio resource manager groups code-division resources, and combines time-division resources, frequency-division resources and the grouped code-division resources into a plurality of PUCCH resources according to an optimization order.

In the above, the optimization order preferably may be that the grouped code-division resources are sorted first, and then the time-division resources or the frequency-division resources are sorted according to any order. More preferably, the optimization order may be the order of sorting according to the formulae (1) and (2) below. Of course, those skilled in the art may sort the time-division resources, the frequency-division resources and the grouped code-division resources by using other appropriate optimization orders according to actual needs, which is not limited in the disclosure.

Step S104: the radio resource manager arranges the plurality of PUCCH resources according to the generation order of the plurality of PUCCH resources to form a resource pool, and employs an allocation pointer to point to the first PUCCH resource in the resource pool;

For example, the time-division resources, the frequency-division resources and the grouped code-division resources are combined into the plurality of PUCCH resources according to the optimization order. One PUCCH resource is obtained in each combination, and is placed into a PUCCH position (which may be a memory space specifically) orderly. All PUCCH resources obtained through the combination form a resource pool. During actual implementation, the PUCCH resources in the resource pool may be stored in different continuous memory spaces according to their generation order.

Step S106: when a terminal (UE) needs to be allocated with a PUCCH resource, the radio resource manager allocates to the terminal the PUCCH resource to which the allocation pointer currently points, and moves the allocation pointer to point to the next PUCCH resource. Therefore, the PUCCH resource to which the allocation pointer currently points and the PUCCH resources after the PUCCH resource to which the allocation pointer currently points are certainly unallocated PUCCH resources.

During actual implementation, after the radio resource manager allocates to the terminal the PUCCH resource to which the allocation pointer currently points, it may be that the radio resource manager deletes the allocated PUCCH resource from the resource pool. And, it also may be that the radio resource manager does not delete the PUCCH resource.

According to the present embodiment, when generating the PUCCH resource, the radio resource manager groups the code-division resources first, and then uses the frequency-division resources, the time-division resources, and the grouped code-division resources to generate the PUCCH resource according to the performance optimization method, and places the PUCCH resource into the resource pool orderly. The demodulation performance of the uplink control channel can be improved by allocating the resources in such a manner. Thus this solution solves the problem in the related art that PUCCH resources allocated by a radio resource manager to a UE cause poor performance of a control channel of a base station. In addition, in the present embodiment, the radio resource manager points sets the allocation pointer, so that the PUCCH resource to which the allocation pointer points is certainly not allocated. Thus, each time when the resources are allocated, it is only needed to allocate to the UE the PUCCH resource to which the allocation pointer currently points. It is unnecessary to perform searching from the beginning in each allocation, and is unnecessary to determine the occupation state of each resource each time when the searching is performed. Thus, this solution solves the problem in the related art that the system complexity is relatively high, simplifies the resource search operation, saves the time for resource search and greatly reduces the system complexity. In the above, inter-code interference can be reduced by grouping the code-division resources, and the PUCCH demodulation performance can be further improved in the case of multiple UEs.

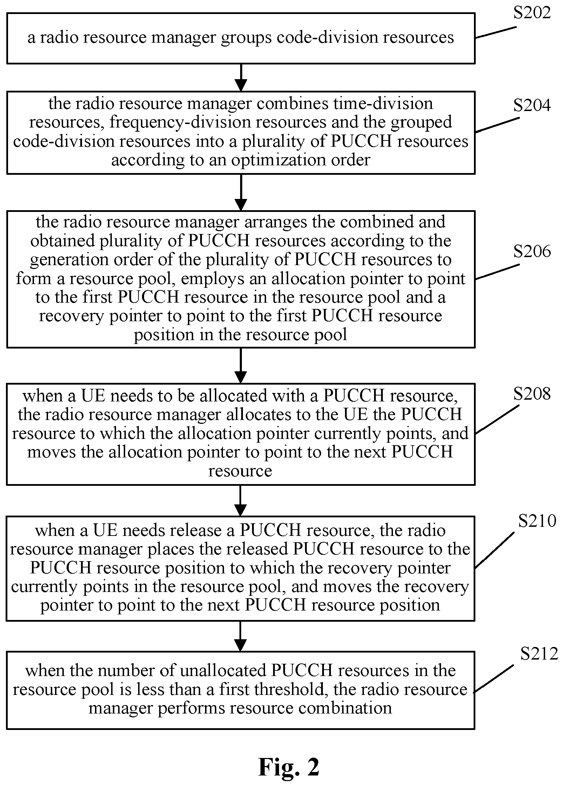

As shown in Fig. 2, a PUCCH radio resource allocation method according to a preferred embodiment of the disclosure specifically includes the following steps.

Step S202: a radio resource manager groups code-division resources.

Preferably, the radio resource manager may group the code-division resources according to the following method: provided that the total number of the code-division resources is U and they are divided into B groups, the number

$$A = \left\lfloor \frac{U}{B} \right\rfloor$$

of code-division resources in each group is $\qquad$, and $\lfloor \ \rfloor$ represents a round-down operation symbol. The index of each code-division resource in each group may be expressed as $k,k+B,k+2B,\cdots,k+(A-1)B$, wherein $k$ represents the group number, $k=0,1,\cdots,B\text{-}1$. In this way, the code-division resources are grouped by using an equal-interval grouping method. In addition, the index difference between two adjacent code-division resources in each group is always B, which can further reduce the inter-code interference. Obviously, the indexes of two adjacent code-division resources in each group may also be continuous.

Obviously, when the code-division resources are grouped, each group contains equal number of code-division

$$A = \frac{U}{B}$$

resources, that is $\qquad$, when B is a factor of U, that is, $\frac{U}{B}$ is an integer. In this case, the set of the code-division resources of all groups are the total code-division resources.

Step S204: the radio resource manager combines time-division resources, frequency-division resources and the grouped code-division resources into a plurality of PUCCH resources according to an optimization order.

Preferably, the step that the radio resource manager combines the time-division resources, the frequency-division resources and the grouped code-division resources into the plurality of PUCCH resources according to the optimization order may comprises that: the radio resource manager selects part of or all groups from the obtained B groups; the radio resource manager combines the time-division resources, the frequency-division resources and the code-division resources in the selected part or all of the B groups into a plurality of PUCCH resources according to the optimization order. Thus, the radio resource manager may only select the code-division resources from part of the groups to generate a resource pool when the resources are relatively sufficient.

Preferably, the radio resource manager may select part of the B groups according to the following method: the radio resource manager selects part of the B groups by means of interval selection. Thus, the groups of the code-division resources are selected by means of interval selection, instead of being selected continuously, which can further reduce the interference between adjacent code-division resources and improve the demodulation performance. For example, when B=4, all code-division resources are divided into 4 groups which group numbers are k=0, k=1, k=2 and k=3, respectively. Only two of them are selected to form a resource pool when PUCCH resources are generated. For example, only two groups which group numbers are k=0 and k=2 are selected, or only two groups which group numbers are k=1 and k=3 are selected.

Preferably, the step that the radio resource manager combines the time-division resources, the frequency-division resources and the code-division resources in the selected part or all of the B groups into the plurality of PUCCH resources may further comprise that:

provided that the total number of frequency-division resources is R, the total number of time-division resources is T, then the PUCCH resource obtained by the radio resource manager by combining the $r^{th}$ frequency division resource, the $t^{th}$ time division resource, and the $a^{th}$ code-division resource in the $k^{th}$ group according to the following formulae (1)

$$C_k^{r,t}(a)$$

and (2) may be expressed as , wherein $r=0,1,\cdots,R$-1, $t=0,1,\cdots,T$-1, and $a=1,2,\cdots,A$. The plurality of PUCCH resources are combined and obtained according to the following formulae:

$$s = k' \times r \times t \times A + r \times t \times A + t \times A + a \qquad (1)$$

or

$$s = k' \times t \times r \times A + t \times r \times A + r \times A + a \qquad (2)$$

wherein s represents the index of a PUCCH resource in the resource pool, $k'$ represents the index of a selected group when the PUCCH resource is combined and obtained by the radio resource manager. For example, two groups are selected from 4 groups which group numbers are respectively k=0, k=1, k=2 and k=3, to form the resource pool. If 2 groups which group numbers are k=0 and k=2 are selected, the indexes of these 2 groups are k'=0 and k'=1, respectively.

Obviously, when all PUCCH resources are obtained through combination in turn, the index of the first combined and obtained PUCCH resource may be set as 1, and the indexes of the second, third and $N^{th}$ combined and obtained PUCCH resources may be set as 2, 3, ..., N, respectively.

Step S202 to Step S204 correspond to Step S102 in Fig. 1.

Step S206: the radio resource manager arranges the combined and obtained plurality of PUCCH resources according to the generation order of the plurality of PUCCH resources to form a resource pool, and employs an allocation pointer to point to the first PUCCH resource in the resource pool and a recovery pointer to point to the first PUCCH resource position in the resource pool. This step corresponds to Step S104 in Fig. 1.

Preferably, the step that the radio resource manager arranges the plurality of PUCCH resources according to the generation order of the plurality of PUCCH resources to form the resource pool comprises that: the radio resource manager places the plurality of combined PUCCH resources into corresponding PUCCH resource positions in the resource pool in turn according to the monotone increasing order of the indexes of the PUCCH resources. That is, the combined and obtained PUCCH resource whose index is 1 is placed at the first PUCCH resource position of the resource pool, and the PUCCH resources whose indexes are 2,3,...,N are placed at the second PUCCH resource position, the third PUCCH resource position, ..., and the $N^{th}$ PUCCH resource position respectively, to make preparation for subsequent resource combination.

During actual implementation, a PUCCH resource position may be a memory space.

Step S208: when a UE needs to be allocated with a PUCCH resource, the radio resource manager allocates to the UE the PUCCH resource to which the allocation pointer currently points, and moves the allocation pointer to point to the next PUCCH resource. This step corresponds to Step S106 in Fig. 1.

During actual implementation, after allocating to the UE the PUCCH resource to which the allocation pointer currently points, it may be that the radio resource manager deletes the allocated PUCCH resource from the resource pool. And, it also may be that the radio resource manager does not delete the PUCCH resource.

Step S210: when a UE needs to release a PUCCH resource, the radio resource manager places the released PUCCH resource to the PUCCH resource position to which the recovery pointer currently points in the resource pool, and moves the recovery pointer to point to the next PUCCH resource position. The step can also be called a resource recovery process. The recovered resource (i.e. the released resource) and the unallocated resources are stored in the same resource pool, without occupying multiple resource pools. Thus, this solution does not increase the storage space required by the system.

Step S212: when the number of unallocated PUCCH resources in the resource pool (the number of the PUCCH resource to which the allocation pointer currently points and the PUCCH resources after the PUCCH resource to which the allocation pointer currently points) is less than a first threshold, the radio resource manager performs resource combination. The resource combination process comprises that: the radio resource manager sorts all PUCCH resources before the recovery pointer according to a monotone increasing order of the indexes of the PUCCH resources; the radio resource manager places the sorted PUCCH resources before the PUCCH resource to which the allocation pointer currently points in the resource pool, to combine the sorted PUCCH resources with the unallocated resources into continuous resources; and the radio resource manager moves the allocation pointer to point to the first PUCCH resource after the resource combination, and moves the recovery pointer to point to the first PUCCH resource position in the resource pool again.

Specifically, whether the number of the unallocated PUCCH resources in the resource pool is less than the first threshold is determined according to the following method: determining whether the index of the PUCCH resource to which the allocation pointer currently points in the resource pool is greater than or equal to a preset index, or determining whether the PUCCH resource to which the allocation pointer currently points is a specific position. For example, if the total number of the PUCCH resources is N when the resource pool is generated, the indexes of the PUCCH resources are numbered from 1, and the first threshold is N/2 (or may be N/3, 2N/3 etc.), then whether the number of the unallocated PUCCH resources in the resource pool is less than N/2 is determined according to the following method: determining whether the index of the PUCCH resource to which the allocation pointer currently points is greater than or equal to (N-N/2+1), or determining whether the PUCCH resource to which the allocation pointer currently points is the (N-N/2+1)th PUCCH resource position in the resource pool.

Preferably, before the resource combination, whether there is a PUCCH resource which can be combined may be determined first, rhat is, the position of the recovery pointer is determined, or whether there is a PUCCH resource before the PUCCH resource position to which the recovery pointer currently points is determined. If the recovery pointer is not at the initial PUCCH resource position of the resource pool or there is a PUCCH resource before the position to which the recovery pointer currently points, then the resource combination is performed. Thus, it is ensured that the resource combination is performed only when there is a resource which can be recovered. This solution improves the resource combination accuracy.

Preferably, if there is no PUCCH resource which can be combined before the resource combination, then, during the process of continuing to allocate resources, the radio resource manager monitors the position of the recovery pointer (that is, continues to determine whether there is a PUCCH resource before the PUCCH resource position to which the recovery pointer currently points). And, the radio resource manager performs the resource combination as long as the recovery pointer is not at the initial PUCCH resource position of the resource pool (that is, there is a PUCCH resource before the PUCCH resource position to which the recovery pointer currently points), to ensure that there are enough resources for subsequent allocation.

Preferably, if there is no PUCCH resource which can be combined before the resource combination, the radio resource manager monitors the position of the recovery pointer (that is, continues to determine whether there is a PUCCH resource before the PUCCH resource position to which the recovery pointer currently points) during the process in which the radio resource manager continues to allocate resources. And, the radio resource manager does not perform the resource combination if the recovery pointer is not at the initial PUCCH resource position of the resource pool (that is, there is a PUCCH resource before the PUCCH resource position to which the recovery pointer currently points) and there are still unallocated resources for subsequent allocation. The radio resource manager performs the resource combination when the recovery pointer satisfies a certain condition (which may be that the number of PUCCH resources before the PUCCH resource position to which the recovery pointer currently points reaches a second number threshold) or there are no sufficient unallocated PUCCH resources which can be allocated (that is, the unallocated PUCCH resources in the resource pool are not enough for allocation), so as to reduce unnecessary resource combination times.

In the preferred embodiment above, the radio resource manager stores the unallocated PUCCH resources and the released resources separately in the same resource pool and indicates them by different pointers (indicates them by the allocation pointer and the recovery pointer, respectively). And, the radio resource manager no longer stores the allocated resources. In this way, the radio resource manager does not need to perform searching from the beginning when allocating the resources, and does not need to determine the occupation state of each resource each time when the searching is performed. Thus, this solution simplifies the resource search, saves the time of resource search and greatly reduces the system complexity. Also, the system storage space is not increased since the resources are allocated, recovered and combined in the same resource pool.

In addition, the radio resource manager recovers and sorts the resources, so that the optimal demodulation performance of the uplink control channel in the system can be realized.

Embodiment 1

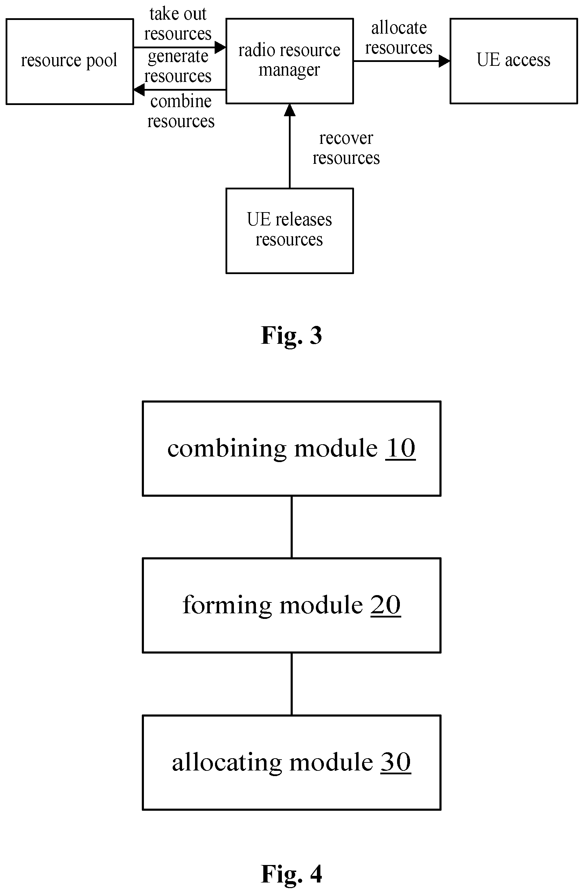

In an LTE uplink control channel, an eNodeB (base station) needs to allocate resources for transmitting a CQI to an accessed UE. As shown in Fig. 3, this process includes the following steps.

Step 1: 12 code-division resources in total are divided into 2 groups, B=2; the group numbers are k=0 and k=1, respectively; each group contains 6 code-division resources, $A$=6; and the code-division resources u in each group are respectively {0,2,4,6,8,10} and {1,3,5,7,9,11}.

Step 2: frequency-division resources, time-division resources and the grouped code-division resources which group number is k=0 are combined to generate a CQI resource pool according to formula (1).

$k'$=0, $a$=1,2,···,6, provided that r=0, and t=0,1, then the corresponding relation between the index s of the generated resource pool and the resources is as shown in Table 1.

Table 1

| s | r | t | u |
|---|---|---|---|
| 1 | 0 | 0 | 0 |
| 2 | 0 | 0 | 2 |
| 3 | 0 | 0 | 4 |
| 4 | 0 | 0 | 6 |
| 5 | 0 | 0 | 8 |
| 6 | 0 | 0 | 10 |
| 7 | 0 | 1 | 0 |
| 8 | 0 | 1 | 2 |
| 9 | 0 | 1 | 4 |
| 10 | 0 | 1 | 6 |
| 11 | 0 | 1 | 8 |
| 12 | 0 | 1 | 10 |

Step 3: when a UE applies for a PUCCH resource, the radio resource manager allocates to the terminal the PUCCH resource to which the allocation pointer points, and moves the allocation pointer to point to the next PUCCH resource.

Step 4: when a UE releases a PUCCH resource, the radio resource manager places the released resource to the PUCCH resource position to which a recovery pointer points, and moves the recovery pointer to point to the next PUCCH resource position.

Step 5: when the position pointed by the allocation pointer reaches a half of the PUCCH resources, the PUCCH resources before the recovery pointer are sorted according to the indexes of the resources in a monotone sequence. Then the sorted PUCCH resources are placed before the allocation pointer to realize resource combination. The allocation pointer is pointed to the first PUCCH resource after the combination and the recovery pointer is pointed to the initial PUCCH resource position of the resource pool again.

Embodiment 2

In an LTE uplink control channel, an eNodeB (base station) needs to allocate resources for transmitting a CQI to an accessed UE. As shown in Fig. 3, this process includes the following steps.

Step 1 is the same as Step 1 in the Embodiment 1.

Step 2: frequency-division resources, time-division resources and the grouped code-division resources which group number is k=1 are selected to generate a CQI resource pool according to formula (2).

$k'$=0, $a$=1,2,···,6, provided that r=0,1, and t=0, then the corresponding relation between the index s of the generated resource pool and the resources is as shown in Table 2.

Table 2

| s | t | r | u |
|---|---|---|---|
| 1 | 0 | 0 | 1 |
| 2 | 0 | 0 | 3 |
| 3 | 0 | 0 | 5 |
| 4 | 0 | 0 | 7 |
| 5 | 0 | 0 | 9 |
| 6 | 0 | 0 | 11 |

(continued)

| s | t | r | u |
|---|---|---|---|
| 7 | 0 | 1 | 1 |
| 8 | 0 | 1 | 3 |
| 9 | 0 | 1 | 5 |
| 10 | 0 | 1 | 7 |
| 11 | 0 | 1 | 9 |
| 12 | 0 | 1 | 11 |

Step 3, Step 4 and Step 5 are the same as those in the Embodiment 1.

Embodiment 3

In an LTE uplink control channel, an eNodeB (base station) needs to allocate resources for transmitting a CQI to an accessed UE. As shown in Fig. 3, this process includes the following steps.

Step 1: 12 code-division resources in total are divided into 4 groups, B=4; the group numbers are k=0, k=1, k=2 and k=3, respectively; each group contains 3 code-division resources, $A$=3; and the code-division resources u in each group are respectively {0,4,8}, {1,5,9}, {2,6,10} and {3,7,11}.

Step 2: frequency-division resources, time-division resources and the grouped code-division resources which group numbers are k=1 and k=3 are combined to generate a CQI resource pool according to formula (1).

k'=0,1, $a$=1,2,···,3, provided that r=0, and t=0,1, then the corresponding relation between the index s of the generated resource pool and the resources is as shown in Table 3.

Table 3

| s | r | t | u |
|---|---|---|---|
| 1 | 0 | 0 | 1 |
| 2 | 0 | 0 | 5 |
| 3 | 0 | 0 | 9 |
| 4 | 0 | 0 | 3 |
| 5 | 0 | 0 | 7 |
| 6 | 0 | 0 | 11 |
| 7 | 0 | 1 | 1 |
| 8 | 0 | 1 | 5 |
| 9 | 0 | 1 | 9 |
| 10 | 0 | 1 | 3 |
| 11 | 0 | 1 | 7 |
| 12 | 0 | 1 | 11 |

Step 3 and Step 4 are the same as those in the Embodiment 1.

Step 5: when the unallocated PUCCH resources in the resource pool are not enough for allocation, the PUCCH resources before the recovery pointer are sorted in the monotone manner according to the indexes of the resources. Then the sorted PUCCH resources are placed before the allocation pointer to realize resource combination. The allocation pointer is pointed to the first PUCCH resource after the combination, and the recovery pointer is pointed to the initial PUCCH resource position of the resource pool again.

Embodiment 4

In an LTE uplink control channel, an eNodeB (base station) needs to allocate resources for transmitting a SR to an accessed UE. As shown in Fig. 3, this process includes the following steps.

Step 1: 18 code-division resources in total are divided into 2 groups, B=2; the group numbers are k=0 and k=1, respectively; each group contains 9 code-division resources, $A$=9; and the code-division resources u in each group are respectively {0,2,4,6,8,10,12,14,16} and {1,3,5,7,9,11,13,15,17}.

Step 2: frequency-division resources, time-division resources and the grouped code-division resources which group number is k=0 are combined to generate an SR resource pool according to formula (1).

$k'$=0, $a$=1,2,···,9, provided that $r$=0 and $t$=0,1,2, then the corresponding relation between the index s of the generated resource pool and the resources is as shown in Table 4.

Table 4

| s | r | t | u |
|---|---|---|---|
| 1 | 0 | 0 | 0 |
| 2 | 0 | 0 | 2 |
| 3 | 0 | 0 | 4 |
| 4 | 0 | 0 | 6 |
| 5 | 0 | 0 | 8 |
| 6 | 0 | 0 | 10 |
| 7 | 0 | 0 | 12 |
| 8 | 0 | 0 | 14 |
| 9 | 0 | 0 | 16 |
| 10 | 0 | 1 | 0 |
| 11 | 0 | 1 | 2 |
| 12 | 0 | 1 | 4 |
| 13 | 0 | 1 | 6 |
| 14 | 0 | 1 | 8 |
| 15 | 0 | 1 | 10 |
| 16 | 0 | 1 | 12 |
| 17 | 0 | 1 | 14 |
| 18 | 0 | 1 | 16 |
| 19 | 0 | 2 | 0 |
| 20 | 0 | 2 | 2 |
| 21 | 0 | 2 | 4 |
| 22 | 0 | 2 | 6 |
| 23 | 0 | 2 | 8 |
| 24 | 0 | 2 | 10 |
| 25 | 0 | 2 | 12 |
| 26 | 0 | 2 | 14 |
| 27 | 0 | 2 | 16 |

Step 3 and Step 4 are the same as those in the Embodiment 1.

Step 5: when the position pointed by the allocation pointer reaches a half of the PUCCH resources, if the recovery pointer is not at the initial PUCCH resource position of the resource pool, then the PUCCH resources before the recovery pointer are sorted according to the indexes of the resources in a monotone sequence. Then, the sorted PUCCH resources are placed before the allocation pointer to realize resource combination. Otherwise, the resource allocation is performed continuously. When the remaining PUCCH resources are not enough for allocation, the resource combination is performed. And, the allocation pointer is pointed to the first PUCCH resource after the combination and the recovery pointer is pointed to the initial PUCCH resource position of the resource pool again.

Fig. 4 is a schematic diagram of a radio resource manager according to an embodiment of the disclosure. The radio resource manager includes: a combining module 10, configured to group code-division resources, and combine time-division resources, frequency-division resources and the grouped code-division resources into a plurality of PUCCH resources according to an optimization order; a forming module 20, configured to arrange the plurality of PUCCH resources according to the generation order of the plurality of PUCCH resources to form a resource pool, and employ an allocation pointer to point to the first PUCCH resource in the resource pool; and an allocating module 30, configured to, when a terminal needs to be allocated with a PUCCH resource, allocate to the terminal the PUCCH resource to which the allocation pointer currently points, and move the allocation pointer to point to the next PUCCH resource.

Preferably, the combining module 10 includes: a grouping module, configured to group the code-division re-

$$A = \left\lfloor \frac{U}{B} \right\rfloor$$

sources into B groups, wherein the number of code-division resources in each group is and the difference between the indexes of two adjacent code-division resources in each group is always B, wherein B is a constant, U represents the total number of the code-division resources, and ⌊ ⌋ represents a round-down operation symbol; a selecting module, configured to select a part or all of the B groups; and a resource forming module, configured to combine the time-division resources, the frequency-division resources and the code-division resources in the selected part or all of the B groups into a plurality of PUCCH resources according to the optimization order.

Preferably, the selecting module selects part of the B groups according to the following method: selecting part of the B groups by means of interval selection.

Preferably, the resource combining module obtains the plurality of PUCCH resources through combination according to the following formulae:

$$s = k' \times r \times t \times A + r \times t \times A + t \times A + a \quad \text{(i.e. the aforementioned formula (1))}$$

or

$$s = k' \times t \times r \times A + t \times r \times A + r \times A + a \quad \text{(i.e. the aforementioned formula (2))},$$

wherein s represents the index of a PUCCH resource, $k'$ represents the index of a selected group, $r$ represents the $r^{th}$ frequency division resource, $t$ represents the $t^{th}$ time division resource, $A$ represents the number of code-division resources in the group whose index is $k'$, and $a$ represents the $a^{th}$ code-division resource in the group whose index is $k'$.

Preferably, the forming module 20 arranges the plurality of PUCCH resources, which is combined and obtained by the combining module 10, according to the generation order of the plurality of PUCCH resources to form the resource pool according to the following method: the plurality of PUCCH resources which are obtained through the combination are placed into corresponding PUCCH resource positions in the resource pool according to the monotone increasing order of the indexes of the PUCCH resources.

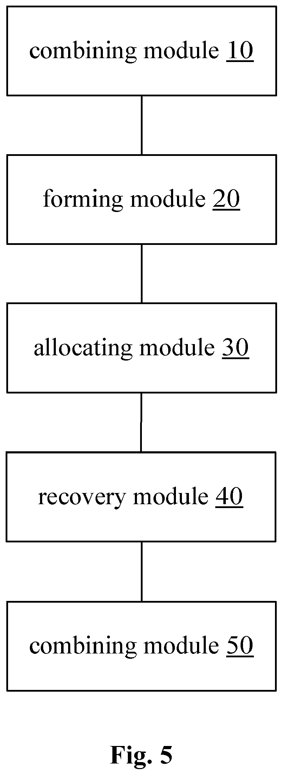

Preferably, the forming module 20 is further configured to employ a recovery pointer to point to the first PUCCH resource position in the resource pool. And, as shown in Fig. 5, the radio resource manager further includes: a recovery module 40, configured to, when the terminal releases a PUCCH resource, place the released PUCCH resource to the PUCCH resource position to which the recovery pointer currently points, and move the recovery pointer to point to the next PUCCH resource position.

Preferably, as shown in Fig. 5, the radio resource manager further includes: a combining module 50, configured to, when the number of unallocated PUCCH resources in the resource pool is less than a first threshold, determine whether there is a PUCCH resource before the PUCCH resource position to which the recovery pointer currently points; and if yes, perform resource combination; otherwise, continue to determine whether there is a PUCCH resource before the PUCCH resource position to which the recovery pointer currently points, and perform resource combination if a preset condition is satisfied, wherein the preset condition includes one of the followings: there is a PUCCH resource before the PUCCH resource position to which the recovery pointer currently points; the number of PUCCH resources before the PUCCH resource position to which the recovery pointer currently points reaches a second threshold; and there is a PUCCH resource before the PUCCH resource position to which the recovery pointer currently points and the unallocated PUCCH resources in the resource pool are not enough for allocation. Preferably, the resource combination performed by the combining module 50 specifically includes: sorting the PUCCH resources before the PUCCH resource position to which the recovery pointer currently points according to the monotone increasing order of indexes of the PUCCH resources; combining the sorted PUCCH resources and placing the combined and sorted PUCCH resources before the PUCCH resource to which the allocation pointer currently points; and moving the allocation pointer to point to the first PUCCH resource in the resource pool after the combination and moving the recovery pointer to point to the first PUCCH resource position in the resource pool again.

It can be concluded from the above description that the disclosure achieves the following technical effects:

(1) the demodulation performance of an uplink control channel is improved, and the problem in the related art that PUCCH resources allocated by a radio resource manager to a UE cause poor performance of a control channel of a base station is solved;

(2) it is unnecessary to perform searching from the beginning during each allocation, and is unnecessary to determine the occupation state of each resource each time when the searching is performed, thus solving the problem in the related art that the system complexity is relatively high, simplifying the resource search, saving the time for resource search and greatly reducing the system complexity;

(3) inter-code interference is reduced by grouping the code-division resources, and the PUCCH demodulation performance is further improved in the case of multiple UEs; and

(4) the recovered resource and the unallocated resources are stored in the same resource pool, which will not increase the storage space of the system.

Obviously, those skilled in the art should understand that individual modules and individual steps of the disclosure can be implemented with general computing devices. They may be integrated in a single computing device or distributed in network formed by a plurality of computing devices. Optionally, they may be implemented by using program codes executable by computing devices. Thus they may be stored in memory devices for execution by the computing devices, or under certain conditions, the steps as illustrated or described can be executed in an order different from the sequences here; or implemented by making them into integrated circuit module respectively, or by making several modules or steps into a single IC. Thus, the disclosure is not limited to any particular combination of hardware and software.

The above are only preferred embodiments of the disclosure and should not be used to limit the disclosure. For those skilled in the art, the disclosure may have various modifications and changes. Any modifications, equivalent replacements, improvements within the principle of the disclosure shall fall within the scope of protection of the disclosure.

**Claims**

1. A Physical Uplink Control Channel (PUCCH) radio resource allocation method, comprising:

a radio resource manager grouping (S102) code-division resources, and combining time-division resources, frequency-division resources and the grouped code-division resources into a plurality of PUCCH resources according to an optimization order;
the radio resource manager arranging (S104) the plurality of PUCCH resources according to a generation order of the plurality of PUCCH resources to form a resource pool, and employing an allocation pointer to point to a first PUCCH resource in the resource pool; and
when a terminal needs to be allocated with a PUCCH resource, the radio resource manager allocating (S106) to the terminal the PUCCH resource to which the allocation pointer currently points, and moving the allocation pointer to point to a next PUCCH resource.

2. The method according to claim 1, **characterized in that** the radio resource manager groups the code-division resources according to a mode of:

the radio resource manager dividing the code-division resources into B groups; the number of the code-division

$$A = \left\lfloor \frac{U}{B} \right\rfloor$$

resources in each group being $\left\lfloor \frac{U}{B} \right\rfloor$ , and a difference between indexes of two adjacent code-division resources in the each group being B,

wherein B is a constant, U represents a total number of the code-division resources, and $\lfloor \ \rfloor$ represents a round-down operation symbol.

**3.** The method according to claim 2, **characterized in that** the radio resource manager combining the time-division resources, the frequency-division resources and the grouped code-division resources into the plurality of PUCCH resources according to the optimization order comprises:

the radio resource manager selecting a part or all of the B groups; and
the radio resource manager combining the time-division resources, the frequency-division resources and the code-division resources in the selected part or all of the B groups, into the plurality of PUCCH resources according to the optimization order.

**4.** The method according to claim 3, **characterized in that** the radio resource manager selects the part of the B groups according to a mode of:
the radio resource manager selecting the part of the B groups by means of interval selection.

**5.** The method according to claim 3, **characterized in that** the radio resource manager combining the time-division resources, the frequency-division resources and the code-division resources in the selected part or all of the B groups into the plurality of PUCCH resources according to the optimization order comprises:
combining to obtain the plurality of PUCCH resources according to a formula of:

$$s = k' \times r \times t \times A + r \times t \times A + t \times A + a \ ,$$

or

$$s = k' \times t \times r \times A + t \times r \times A + r \times A + a \ ,$$

wherein s represents the index of the PUCCH resource, $k'$ represents a index of a selected group, $r$ represents the $r^{th}$ frequency division resource, t represents the $t^{th}$ time division resource, $A$ represents the number of the code-division resources in a group whose index is $k'$, and $a$ represents the $a^{th}$ code-division resource in a group whose index is k'.

**6.** The method according to claim 5, **characterized in that** the radio resource manager arranging the plurality of PUCCH resources according to the generation order of the plurality of PUCCH resources to form the resource pool comprises:
the radio resource manager placing the plurality of PUCCH resources, obtained through the combination, into corresponding PUCCH resource positions in the resource pool in turn according to a monotone increasing order of indexes of the plurality of PUCCH resources.

**7.** The method according to any one of claims 1 to 6, **characterized in that** the method further comprises:

the radio resource manager employing a recovery pointer to point to a first PUCCH resource position in the resource pool; and
when the terminal releases the PUCCH resource, the radio resource manager placing the released PUCCH resource to a PUCCH resource position to which the recovery pointer currently points, and moving the recovery pointer to point to a next PUCCH resource position.

**8.** The method according to claim 7, **characterized in that** the method further comprises:

when the number of unallocated PUCCH resources in the resource pool is less than a first threshold, the radio resource manager determining whether there is the PUCCH resource before the PUCCH resource position to which the recovery pointer currently points; and

if yes, the radio resource manager performing resource combination;

otherwise, the radio resource manager continuing to determine whether there is the PUCCH resource before the PUCCH resource position to which the recovery pointer currently points, and performing the resource combination if a preset condition is satisfied, wherein the preset condition comprises one of the following: there is the PUCCH resource before the PUCCH resource position to which the recovery pointer currently points; the number of PUCCH resources before the PUCCH resource position to which the recovery pointer currently points reaches a second threshold; and there is the PUCCH resource before the PUCCH resource position to which the recovery pointer currently points and the unallocated PUCCH resources in the resource pool are not enough for allocation.

9. The method according to claim 8, **characterized in that** the radio resource manager performing the resource combination comprises:

the radio resource manager sorting the PUCCH resources before the PUCCH resource position to which the recovery pointer currently points according to the monotone increasing order of the indexes of the PUCCH resources;

the radio resource manager combining the sorted PUCCH resources and placing the combined and sorted PUCCH resources before the PUCCH resource to which the allocation pointer currently points; and

the radio resource manager moving the allocation pointer to point to the first PUCCH resource in the resource pool after the combination, and moving the recovery pointer to point to the first PUCCH resource position in the resource pool again.

10. A radio resource manager, comprising:

a combining module (10), configured to group code-division resources, and combine time-division resources, frequency-division resources and the grouped code-division resources into a plurality of PUCCH resources according to an optimization order;

a forming module (20), configured to arrange the plurality of PUCCH resources according to a generation order of the plurality of PUCCH resources to form a resource pool, and employ an allocation pointer to point to a first PUCCH resource in the resource pool; and

an allocating module (30), configured to, when a terminal needs to be allocated with a PUCCH resource, allocate to the terminal the PUCCH resource to which the allocation pointer currently points, and move the allocation pointer to point to a next PUCCH resource.

11. The radio resource manager according to claim 10, **characterized in that** the forming module is further configured to move a recovery pointer to point to a first PUCCH resource position in the resource pool; and

the radio resource manager further comprises: a recovering module, configured to, when the terminal releases the PUCCH resource, place the released PUCCH resource to a PUCCH resource position to which the recovery pointer currently points, and move the recovery pointer to point to a next PUCCH resource position.

**Patentansprüche**

1. Verfahren zur Zuweisung von Physical Uplink Control Channel (PUCCH)-Funkressourcen, umfassend:

Gruppieren (S102) von Codeteilungsressourcen durch einen Funkressourcenmanager, und Kombinieren von Zeitteilungsressourcen, Frequenzteilungsressourcen und der gruppierten Codeteilungsressourcen in eine Vielzahl von PUCCH-Ressourcen nach einer Optimierungsabfolge;

Anordnen (S104), durch den Funkressourcenmanager, der Vielzahl von PUCCH-Ressource nach einer Erzeugungsabfolge der Vielzahl von PUCCH-Ressource, um einen Ressourcenpool zu bilden, und Anwenden eines Zuweisungsanzeigers, um auf eine erste PUCCH-Ressource in dem Ressourcenpool zu zeigen; und

wenn einem Terminal eine PUCCH-Ressource zugewiesen werden muss, Zuweisen (S106), durch den Funkressourcenmanager, der PUCCH-Ressource, auf welche der Zuweisungsanzeiger derzeit zeigt, an das Terminal, und Bewegen des Zuweisungsanzeigers, um auf eine nächste PUCCH-Ressource zu zeigen.

2. Verfahren nach Anspruch 1, **dadurch gekennzeichnet, dass** der Funkressourcenmanager die Codeteilungsressourcen nach einem folgenden Modus gruppiert:

Unterteilen, durch den Funkressourcenmanager, der Codeteilungsressourcen in B Gruppen;

$$A = \left\lfloor \frac{U}{B} \right\rfloor$$

wobei die Zahl der Codeteilungsressourcen in jeder Gruppe $A = \left\lfloor \frac{U}{B} \right\rfloor$ ist, und eine Differenz zwischen Indizes von zwei benachbarten Codeteilungsressourcen in der jeweiligen Gruppe B ist,
worin B eine Konstante ist, U eine Gesamtzahl der Codeteilungsressourcen repräsentiert und ⌊ ⌋ ein Abrundungsvorgangssymbol repräsentiert.

3. Verfahren nach Anspruch 2, **dadurch gekennzeichnet, dass** das Kombinieren der Zeitteilungsressourcen, der Frequenzteilungsressourcen und der gruppierten Codeteilungsressourcen in die Vielzahl von PUCCH-Ressource nach der Optimierungsabfolge durch den Funkressourcenmanager umfasst:

Auswählen eines Teils oder aller von den B Gruppen durch den Funkressourcenmanager; und Kombinieren, durch den Funkressourcenmanager, der Zeitteilungsressourcen, der Frequenzteilungsressourcen und der Codeteilungsressourcen in dem ausgewählten Teil oder allen von den B Gruppen in die Vielzahl von PUCCH-Ressourcen nach der Optimierungsabfolge.

4. Verfahren nach Anspruch 3, **dadurch gekennzeichnet, dass** der Funkressourcenmanager den Teil von den B Gruppen nach einem folgenden Modus auswählt:
Auswählen, durch den Funkressourcenmanager, des Teils von den B Gruppen mithilfe von Intervallauswahl.

5. Verfahren nach Anspruch 3, **dadurch gekennzeichnet, dass** das Kombinieren der Zeitteilungsressourcen, der Frequenzteilungsressourcen und der Codeteilungsressourcen in dem ausgewählten Teil oder allen von den B Gruppen in die Vielzahl von PUCCH-Ressourcen nach der Optimierungsabfolge durch den Funkressourcenmanager umfasst:
Kombinieren, um die Vielzahl von PUCCH-Ressource nach einer Formel zu erhalten, welche lautet:

$$s = k' \times r \times t \times A + r \times t \times A + t \times A + a,$$

oder

$$s = k' \times t \times r \times A + t \times r \times A + r \times A + a,$$

worin s den Index der PUCCH-Ressource repräsentiert, k' einen Index einer ausgewählten Gruppe repräsentiert, r die r-te Frequenzteilungsressource repräsentiert, t die t-te Zeitteilungsressource repräsentiert, A die Zahl der Codeteilungsressourcen in einer Gruppe, deren Index k' ist, repräsentiert, und a die a-te Codeteilungsressource in einer Gruppe, deren Index k' ist, repräsentiert.

6. Verfahren nach Anspruch 5, **dadurch gekennzeichnet, dass** Anordnen, durch den Funkressourcenmanager, der Vielzahl von PUCCH-Ressource nach der Erzeugungsabfolge der Vielzahl von PUCCH-Ressourcen, um den Ressourcenpool zu bilden, umfasst:
Platzieren, durch den Funkressourcenmanager, der Vielzahl von PUCCH-Ressourcen, welche durch die Kombination erhalten wurden, abwechseln in entsprechende PUCCH-Ressourcenpositionen in dem Ressourcenpool nach einer monoton ansteigenden Abfolge von Indizes der Vielzahl von PUCCH-Ressourcen.

7. Verfahren nach einem der Ansprüche 1 bis 6, **dadurch gekennzeichnet, dass** das Verfahren weiter umfasst:

Anwenden, durch den Funkressourcenmanager, eines Wiederherstellungsanzeigers, um auf eine erste PUCCH-Ressourcenposition in dem Ressourcenpool zu zeigen; und
wenn das Terminal die PUCCH-Ressource freigibt, Platzieren, durch den Funkressourcenmanager, der freigegebenen PUCCH-Ressource an einer PUCCH-Ressourcenposition, auf welche der Wiederherstellungsanzeiger derzeit zeigt, und Bewegen des Wiederherstellungsanzeigers, um auf eine nächste PUCCH-Ressourcenposition zu zeigen.

8. Verfahren nach Anspruch 7, **dadurch gekennzeichnet, dass** das Verfahren weiter umfasst:

wenn die Zahl von nicht zugewiesenen PUCCH-Ressourcen in dem Ressourcenpool kleiner ist als eine erste Schwelle, Bestimmen, durch den Funkressourcenmanager, ob es die PUCCH-Ressource vor der PUCCH-Ressourcenposition gibt, auf welche der Wiederherstellungsanzeiger derzeit zeigt; und
falls ja, Durchführen der Ressourcenkombination durch den Funkressourcenmanager;
anderenfalls, Fortsetzen, durch den Funkressourcenmanager, der Bestimmung, ob es die PUCCH-Ressource vor der PUCCH-Ressourcenposition gibt, auf welche der Wiederherstellungsanzeiger derzeit zeigt, und Durchführen der Ressourcenkombination, wenn eine vorbestimmte Bedingung erfüllt ist, wobei die vorbestimmte Bedingung eine der folgenden umfasst: es gibt die PUCCH-Ressource vor der PUCCH-Ressourcenkombination, auf welche der Wiederherstellungsanzeiger derzeit zeigt; die Zahl von PUCCH-Ressource vor der PUCCH-Ressourcenposition, auf welche der Wiederherstellungsanzeiger derzeit zeigt, erreicht eine zweite Schwelle; und es gibt die PUCCH-Ressource vor der PUCCH-Ressourcenposition, auf welche der Wiederherstellungsanzeiger derzeit zeigt, und die nicht zugewiesenen PUCCH-Ressourcen in dem Ressourcenpool sind für eine Zuweisung nicht genug.

9. Verfahren nach Anspruch 8, **dadurch gekennzeichnet, dass** das Durchführen der Ressourcenkombination durch den Funkressourcenmanager umfasst:

Sortieren, durch den Funkressourcenmanager, der PUCCH-Ressourcen vor der PUCCH-Ressourcenposition, auf welche der Wiederherstellungsanzeiger derzeit zeigt, nach der monoton ansteigenden Abfolge der Indizes der PUCCH-Ressourcen;
Kombinieren, durch den Funkressourcenmanager, der sortierten PUCCH-Ressourcen und Platzieren der kombinierten und sortierten PUCCH-Ressource vor der PUCCH-Ressource, auf welche der Zuweisungsanzeiger derzeit zeigt; und
Bewegen, durch den Funkressourcenmanager, des Zuweisungsanzeigers, um auf die erste PUCCH-Ressource in dem Ressourcenpool nach der Kombination zu zeigen, und Bewegen des Wiederherstellungsanzeigers, um wieder auf die erste PUCCH-Ressourcenposition in dem Ressourcenpool zu zeigen.

10. Funkressourcenmanager, umfassend:

ein Kombinierungsmodul (10), welches konfiguriert ist, Codeteilungsressourcen zu gruppieren, und Zeitteilungsressourcen, Frequenzteilungsressourcen und die gruppierten Codeteilungsressourcen in eine Vielzahl von PUCCH-Ressourcen nach einer Optimierungsabfolge zu kombinieren;
ein Bildungsmodul (20), welches konfiguriert ist, die Vielzahl von PUCCH-Ressourcen nach einer Erzeugungsabfolge der Vielzahl von PUCCH-Ressource anzuordnen, um einen Ressourcenpool zu bilden, und einen Zuweisungsanzeiger anzuwenden, um auf eine erste PUCCH-Ressource in dem Ressourcenpool zu zeigen; und
ein Zuweisungsmodul (30), welches konfiguriert ist, wenn einem Terminal eine PUCCH-Ressource zugewiesen werden muss, die PUCCH-Ressource, auf welche der Zuweisungsanzeiger derzeit zeigt, an das Terminal zuzuweisen, und den Zuweisungsanzeiger zu bewegen, um auf eine nächste PUCCH-Ressource zu zeigen.

11. Funkressourcenmanager nach Anspruch 10, **dadurch gekennzeichnet, dass** das Bildungsmodul weiter konfiguriert ist, einen Wiederherstellungsanzeiger zu bewegen, um auf eine erste PUCCH-Ressourcenposition in dem Ressourcenpool zu zeigen; und
der Funkressourcenmanager weiter umfasst: ein Wiederherstellungsmodul, welches konfiguriert ist, wenn das Terminal die PUCCH-Ressource freigibt, die freigegebene PUCCH-Ressource an einer PUCCH-Ressourcenposition zu platzieren, auf welche der Wiederherstellungsanzeiger derzeit zeigt, und den Wiederherstellungsanzeiger zu bewegen, um auf eine nächste PUCCH-Ressource zu zeigen.

**Revendications**

1. Procédé d'allocation de ressources radio de canal physique de commande de liaison montante (PUCCH) comprenant :

le groupement (S102) de ressources par répartition de code, et la combinaison de ressources par répartition dans le temps, de ressources par répartition en fréquence et les ressources par répartition de code groupées en une pluralité de ressources PUCCH en fonction d'un ordre d'optimisation, par un gestionnaire de ressources radio ;

l'agencement (S104) de la pluralité de ressources PUCCH en fonction d'un ordre de génération de la pluralité de ressources PUCCH pour former un regroupement de ressources, et l'utilisation d'un pointeur d'allocation pour pointer sur une première ressource PUCCH dans le regroupement de ressources, par le gestionnaire de ressources radio ; et

quand un terminal a besoin d'avoir une ressource PUCCH allouée, l'allocation (S106) au terminal de la ressource PUCCH sur laquelle le pointeur d'allocation pointe actuellement, et le déplacement du pointeur d'allocation pour pointer sur une ressource PUCCH suivante, par le gestionnaire de ressources radio.

2. Procédé selon la revendication 1, **caractérisé en ce que** le gestionnaire de ressources radio groupe les ressources par répartition de code selon un mode suivant :

la division, par le gestionnaire de ressources radio, des ressources par répartition de code en B groupes ;

le nombre des ressources par répartition de code dans chaque groupe étant $A = \left\lfloor \dfrac{U}{B} \right\rfloor$, et une différence entre des indices de deux ressources par répartition de code dans chaque groupe étant B,

dans lequel B est une constante, U représente un nombre total de ressources par répartition de code et $\lfloor \ \rfloor$ représente un symbole d'opération d'arrondi vers le bas.

3. Procédé selon la revendication 2, **caractérisé en ce que** la combinaison, par le gestionnaire de ressources radio, des ressources par répartition dans le temps, des ressources par répartition en fréquence et des ressources par répartition de code groupées en la pluralité de ressources PUCCH en fonction de l'ordre d'optimisation comprend :

la sélection, par le gestionnaire de ressources radio, d'une partie ou de la totalité des groupes B ; et

la combinaison, par le gestionnaire de ressources radio, des ressources par répartition dans le temps, des ressources par répartition en fréquence et des ressources par répartition de code dans la partie ou la totalité sélectionnée des groupes B, en la pluralité de ressources PUCCH en fonction de l'ordre d'optimisation.

4. Procédé selon la revendication 3, **caractérisé en ce que** le gestionnaire de ressources radio sélectionne la partie des groupes B selon un mode suivant :
la sélection, par le gestionnaire de ressources radio, de la partie des groupes B, au moyen d'une sélection d'intervalle.

5. Procédé selon la revendication 3, **caractérisé en ce que** la combinaison, par le gestionnaire de ressources radio, des ressources par répartition dans le temps, des ressources par répartition en fréquence et des ressources par répartition de code dans la partie ou la totalité sélectionnée des groupes B, en la pluralité de ressources PUCCH en fonction de l'ordre d'optimisation comprend :
la combinaison pour obtenir la pluralité de ressources PUCCH selon une formule parmi :

```
s = k' x r x t x A + r x t x A + t x A + a,
```

ou

```
s = k' x t x r x A + t x r x A + r x A + a,
```

dans lequel s représente l'indice de la ressource PUCCH, k' représente un indice d'un groupe sélectionné, r représente la r-ième ressource de répartition par fréquence, t représente la t-ième ressource de répartition dans le temps, A représente le nombre des ressources par répartition de code dans un groupe dont l'indice est k', et a représente la a-ième ressource par répartition de code dans un groupe dont l'indice est k'.

6. Procédé selon la revendication 5, **caractérisé en ce que** l'agencement, par le gestionnaire de ressources radio, de la pluralité de ressources PUCCH en fonction de l'ordre de génération de la pluralité de ressources PUCCH pour former le regroupement de ressources comprend :
le positionnement, par le gestionnaire de ressources radio, de la pluralité de ressources PUCCH, obtenues par le biais de la combinaison, dans des positions de ressources PUCCH correspondantes dans le regroupement de ressources chacune à son tour selon un ordre croissant monotone d'indices de la pluralité de ressources PUCCH.

**7.** Procédé selon l'une quelconque des revendications 1 à 6, **caractérisé en ce que** le procédé comprend en outre :

l'utilisation, par le gestionnaire de ressources radio, d'un pointeur de récupération pour pointer sur une première position de ressource PUCCH dans le regroupement de ressources ; et
quand le terminal libère la ressource PUCCH, le positionnement de la ressource PUCCH libérée dans une position de ressource PUCCH sur laquelle le pointeur de récupération pointe actuellement, et le déplacement du pointeur de récupération pour pointer sur une position de ressource PUCCH suivante, par le gestionnaire de ressources radio.

**8.** Procédé selon la revendication 7, **caractérisé en ce que** le procédé comprend en outre :

quand le nombre de ressources PUCCH non allouées dans le regroupement de ressources est inférieur à un premier seuil, le fait de déterminer, par le gestionnaire de ressources radio, s'il existe la ressource PUCCH avant la position de ressource PUCCH sur laquelle le pointeur de récupération pointe actuellement ; et dans l'affirmative, l'exécution, par le gestionnaire de ressources radio, d'une combinaison de ressources ; sinon, la poursuite du fait de déterminer s'il existe la ressource PUCCH avant la position de ressource PUCCH sur laquelle le pointeur de récupération pointe actuellement, et l'exécution de la combinaison de ressources si une condition prédéfinie est satisfaite, par le gestionnaire de ressources radio, dans lequel la condition prédéfinie comprend un de ce qui suit : il existe la ressource PUCCH avant la position de ressource PUCCH sur laquelle le pointeur de récupération pointe actuellement ; le nombre de ressources PUCCH avant la position de ressource PUCCH sur laquelle le pointeur de récupération pointe actuellement atteint un deuxième seuil ; et il existe la ressource PUCCH avant la position de ressource PUCCH sur laquelle le pointeur de récupération pointe actuellement et les ressources PUCCH non allouées dans le regroupement de ressource ne sont pas suffisantes pour une allocation.

**9.** Procédé selon la revendication 8, **caractérisé en ce que** l'exécution de la combinaison de ressources, par le gestionnaire de ressources radio, comprend :

le tri, par le gestionnaire de ressources radio, des ressources PUCCH avant la position de ressource PUCCH sur laquelle le pointeur de récupération pointe actuellement en fonction de l'ordre croissant monotone des indices des ressources PUCCH ;
la combinaison des ressources PUCCH triées et le positionnement des ressources PUCCH triées et combinées avant ressource PUCCH sur laquelle le pointeur d'allocation pointe actuellement, par le gestionnaire de ressources radio ; et
le déplacement du pointeur d'allocation pour pointer sur la première ressource PUCCH dans le regroupement de ressources après la combinaison, et le déplacement du pointeur de récupération pour pointer à nouveau sur la première position de ressource PUCCH dans le regroupement de ressources, par le gestionnaire de ressources radio.

**10.** Gestionnaire de ressources radio comprenant :

un module de combinaison (10) configuré pour grouper des ressources par répartition de code et combiner des ressources par répartition dans le temps, de ressources par répartition en fréquence et les ressources par répartition de code groupées en une pluralité de ressources PUCCH en fonction d'un ordre d'optimisation ;
un module de formation (20) configuré pour agencer la pluralité de ressources PUCCH en fonction d'un ordre de génération de la pluralité de ressources PUCCH pour former un regroupement de ressources, et utiliser un pointeur d'allocation pour pointer sur une première ressource PUCCH dans le regroupement de ressources ; et
un module d'allocation (30) configuré pour, quand un terminal a besoin d'avoir une ressource PUCCH allouée, allouer au terminal de la ressource PUCCH sur laquelle le pointeur d'allocation pointe actuellement, et déplacer le pointeur d'allocation pour pointer sur une ressource PUCCH suivante.

**11.** Gestionnaire de ressources radio selon la revendication 10, **caractérisé en ce que** le module de formation est configuré en outre pour déplacer un pointeur de récupération pour pointer sur une première position de ressource PUCCH dans le regroupement de ressources ; et
le gestionnaire de ressources radio comprend en outre : un module de récupération configuré pour, quand le terminal libère la ressource PUCCH, positionner la ressource PUCCH libérée dans une position de ressource PUCCH sur laquelle le pointeur de récupération pointe actuellement, et déplacer le pointeur de récupération pour pointer sur une position de ressource PUCCH suivante.

a radio resource manager groups code-division resources, and combines time-division resources, frequency-division resources and the grouped code-division resources into a plurality of PUCCH resources according to an optimization order — S102

the radio resource manager arranges the plurality of PUCCH resources according to the generation order of the plurality of PUCCH resources to form a resource pool, and employs an allocation pointer to point to the first PUCCH resource in the resource pool — S104

when a terminal needs to be allocated with a PUCCH resource, the radio resource manager allocates to the terminal the PUCCH resource to which the allocation pointer currently points, and moves the allocation pointer to point to the next PUCCH resource — S106

**Fig. 1**

a radio resource manager groups code-division resources — S202

the radio resource manager combines time-division resources, frequency-division resources and the grouped code-division resources into a plurality of PUCCH resources according to an optimization order — S204

the radio resource manager arranges the combined and obtained plurality of PUCCH resources according to the generation order of the plurality of PUCCH resources to form a resource pool, employs an allocation pointer to point to the first PUCCH resource in the resource pool and a recovery pointer to point to the first PUCCH resource position in the resource pool — S206

when a UE needs to be allocated with a PUCCH resource, the radio resource manager allocates to the UE the PUCCH resource to which the allocation pointer currently points, and moves the allocation pointer to point to the next PUCCH resource — S208

when a UE needs release a PUCCH resource, the radio resource manager places the released PUCCH resource to the PUCCH resource position to which the recovery pointer currently points in the resource pool, and moves the recovery pointer to point to the next PUCCH resource position — S210

when the number of unallocated PUCCH resources in the resource pool is less than a first threshold, the radio resource manager performs resource combination — S212

**Fig. 2**

**Fig. 3**

**Fig. 4**

combining module <u>10</u>

forming module <u>20</u>

allocating module <u>30</u>

recovery module <u>40</u>

combining module <u>50</u>

**Fig. 5**

## REFERENCES CITED IN THE DESCRIPTION

**Patent documents cited in the description**

- EP 1959706 A
- EP 1075769 A